# EUROPEAN PATENT APPLICATION

(11) **EP 4 273 416 A1**
(43) Date of publication of application: **08.11.2023**
(21) Application number: 23171706.7
(22) Date of filing: 04.05.2023
(51) Int. Cl.: F16F 1/38

(54) **BUSHING WITH INTEGRATED AXIAL STOP FEATURE**

(30) Priority: 05.05.2022 US 202263338557 P; 24.04.2023 US 202318138247
(71) Applicant: Vibracoustic USA, Inc., South Haven, MI 49090 (US)
(72) Inventor: Stender, Deric, Kalamazoo, 49009 (US); Pelech, Theodore, Grandville, 49418 (US)
(74) Representative: Patentanwälte Olbricht Buchhold Keulertz

(57) **Abstract**

An elastic bushing includes a core, an outer tube, and an elastomer body disposed between the core and the outer tube. The core includes an inner central portion and a wing extending radially from the inner central portion. In embodiments, the inner central portion and the wing of the core are integrally formed as a one-piece component. In embodiments, a portion of the wing and a curved or bent portion of the outer tube provide an overlap in an axial direction that forms an axial limitation.

## Description

### CROSS-REFERENCE TO RELATED APPLICATION

This application claims the benefit of and priority to United States Provisional Patent Application Serial No. 63/338,557, filed on May 5, 2022, the disclosure of which is hereby incorporated by reference in its entirety as though fully set forth herein.

### TECHNICAL FIELD

The present disclosure generally relates to bushings, including elastic bushings with an axial travel restriction.

### BACKGROUND

This background description is set forth below for the purpose of providing context only. Therefore, any aspect of this background description, to the extent that it does not otherwise qualify as prior art, is neither expressly nor impliedly admitted as prior art against the instant disclosure.

Elastic bushings may have an inner core and an outer sleeve and may be arranged concentrically. Although, with some bushings, the inner core and outer sleeve may be non-concentrically oriented. The bushing may provide a degree of movement or play in the axial and radial directions, without requiring separate additional parts. With some conventional bushings, an axial stop may be included. An axial stop may take the form of a separate integrated component, such as a separate plastic limitation disc and an inwardly bended outer tube. With such bushings, the bending may need to be done to provide an overlap in the axial direction between the disc and the outer tube.

However, such elastic bushings can require an additional component, such as a plastic stopper, and may necessitate additional assembly steps. Moreover, a plastic stopper may not be sufficient for handling all levels of higher loads.

For at least these reasons, there is a desire for an improved bushing that can address some of the challenges associated with conventional bushings.

### SUMMARY

An elastic bushing includes a core, an outer tube, and an elastomer body disposed between the core and the outer tube. The core includes an inner central portion and a wing extending radially from the inner central portion. In embodiments, the inner central portion and the wing of the core are integrally formed as a one-piece component. In embodiments, a portion of the wing and a curved or bent portion of the outer tube provide an overlap in an axial direction that forms an axial limitation.

The foregoing and other aspects, features, details, utilities, and/or advantages of embodiments of the present disclosure will be apparent from reading the following description, and from reviewing the accompanying drawings.

### BRIEF DESCRIPTION OF THE DRAWINGS

**FIG. 1** is a perspective view of an embodiment of a bushing according to the teachings of the present disclosure.
**FIG. 2** is a cross sectional view of an embodiment of a bushing such as shown in **FIG. 1****.**
**FIG. 3** is an end view of a bushing according to teachings of the present disclosure.
**FIG. 4** is a cross sectional view of the embodiment of the bushing shown in **FIG. 3** along the line A-A.
**FIG. 5** is a side view of the embodiment of the bushing shown in **FIG. 4****.**
**FIG. 6** is a cross sectional view of the embodiment of the bushing shown in **FIG. 5** along the line B-B.
**FIGS. 7-10** are cross sectional views of embodiments of bushings according to teachings of the present disclosure.
**FIGS 11** **and** **12** are cross sectional views of embodiments of bushings according to teachings of the present disclosure.

### DETAILED DESCRIPTION

Reference will now be made in detail to embodiments of the present disclosure, examples of which are described herein and illustrated in the accompanying drawings. While the present disclosure will be described in conjunction with embodiments and/or examples, it will be understood that they do not limit the present disclosure to these embodiments and/or examples. On the contrary, the present disclosure covers alternatives, modifications, equivalents, and combinations of teachings associated with presented solutions.

Various embodiments are described herein for various apparatuses, systems, and/or methods. Numerous specific details are set forth to provide a thorough understanding of the overall structure, function, manufacture, and use of the embodiments as described in the specification and illustrated in the accompanying drawings. It will be understood by those skilled in the art, however, that the embodiments may be practiced without such specific details. In other instances, well-known operations, components, and elements have not been described in detail so as not to obscure the embodiments described in the specification. Those of ordinary skill in the art will understand that the embodiments described and illustrated herein are non-limiting examples, and thus it can be appreciated that the specific structural and functional details disclosed herein may be representative and do not necessarily limit the scope of the embodiments.

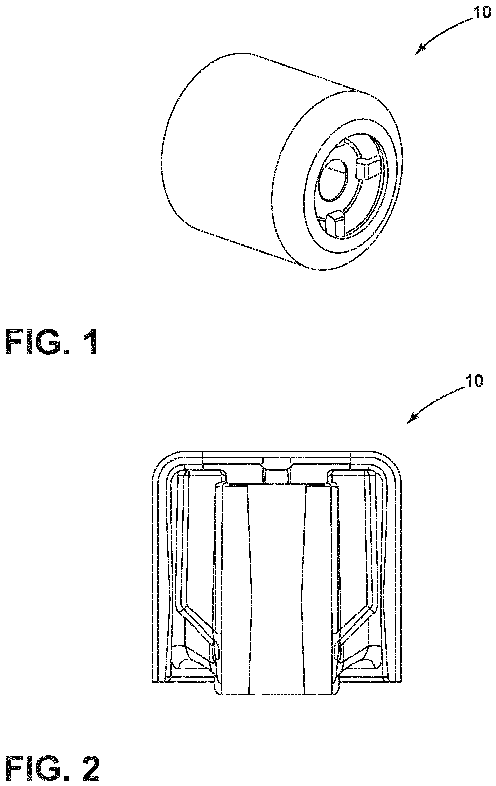

Referring now to **FIG. 1****,** a perspective view of an embodiment of a bushing 10 according to teachings of the present disclosure is shown. **FIG. 2** is a cross sectional view of an embodiment of a bushing 10 such as shown in **FIG. 1****.** In embodiments, an inner component (which may be comprised of metal) associated with the bushing 10 may move in longitudinal direction, and the travel of the inner component may be limited in the longitudinal direction by an interference (e.g., between a portion of the inner component and a portion of the outer component). Additionally, with embodiments, the outer component may be connected, e.g., fixed, to another components, such as a portion of a vehicle body or a link arm.

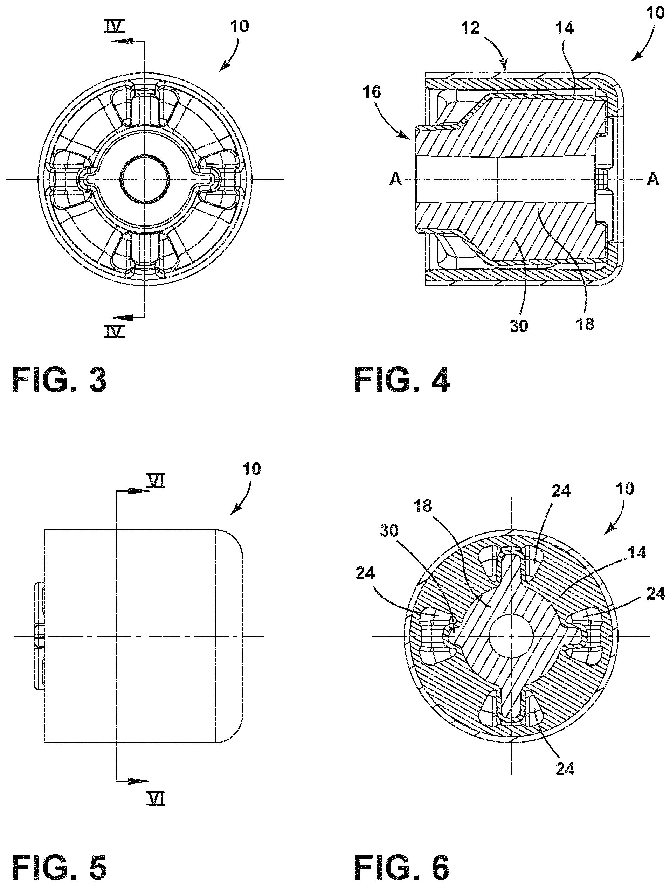

**FIG. 3** generally illustrates an end view of a bushing 10 according to teachings of the present disclosure. **FIG. 4** generally illustrates a cross sectional view through the embodiment of the bushing shown in **FIG. 3** taken along the line A-A. As generally illustrated in **FIG. 4****,** the bushing may include an outer tube (or outer sleeve) 12, a core 16, and an elastomer body 14 disposed between at least portions of the outer tube 12 and core 16. The core 16 may comprise an inner central portion 18 and one or more wings 30. In embodiments, the inner central portion 18 may have an annular (e.g., ring-like) shape or form. However, for other embodiments, the inner central portion 18 may have other shapes or forms, such as for example and without limitation, the inner central portion may have a square, an elliptical, or even a free form shape. In embodiments, the inner central portion 18 and the one or more wings 30 may be integrally formed as a one-piece or unitary component.

In embodiments, the core may be comprised of metal. Moreover, with some embodiments, the core may be comprised of high pressure die cast or extruded aluminum. Embodiments of the core may include draft angles.

In embodiments, the elastomer body 14 may be comprised of rubber. In embodiments, the elastomer body may be disposed around an outer surface of each of a plurality of wings 30 to serve as a layer (radially) between the outer surface of the plurality of wings and respective voids that receive such wings. Additionally, with embodiments, an offset may be provided between an axial face of the wing 30 and the rest (or other portions) of the core 16. Furthermore, the elastomer body may also cover all or a portion of the inside (inner surface) of a curved or bent portion of the outer tube and thus, may serve as an elastomer snubber in the axial direction. With such embodiments, the elastomer layer on the curved or bent portion of the outer tube may be attached or bonded, e.g., by vulcanization, in the portion or section prior to the curving or bending of the portion of the outer tube or outer tube edge. After curving or bending, it may be beneficial that the elastomer sufficiently remains attached or bonded to the curved or bent (e.g., rolled) edge of the outer tube, which may be the case in spite of deformations associated with the substrate (e.g., metal substrate).

**FIG. 5** generally illustrates a side view of the embodiment of the bushing 10 such as shown in **FIG. 4. FIG. 6** is a cross sectional view through the embodiment of the bushing 10 shown in **FIG. 5** taken along the line B-B. The embodiment of the bushing 10 shown in **FIG. 5** includes four voids (or spaces) 24 formed by, or in part with, the elastomer body 14. As generally illustrated, four wings 30 of the core 16 are, at least in part, received within at least a portion of four respective voids 24. In embodiments, a void may be configured (or adapted) to permit movement of the core in a radial and/or an axial direction. Additionally, with embodiments, one or more voids may serve to provide a progressive stiffness in a void direction with respective wings serving as radial limiters. As generally illustrated in **FIG. 6****,** at least in such view, an elastomer body 14 may have a generally x-shaped configuration or form.

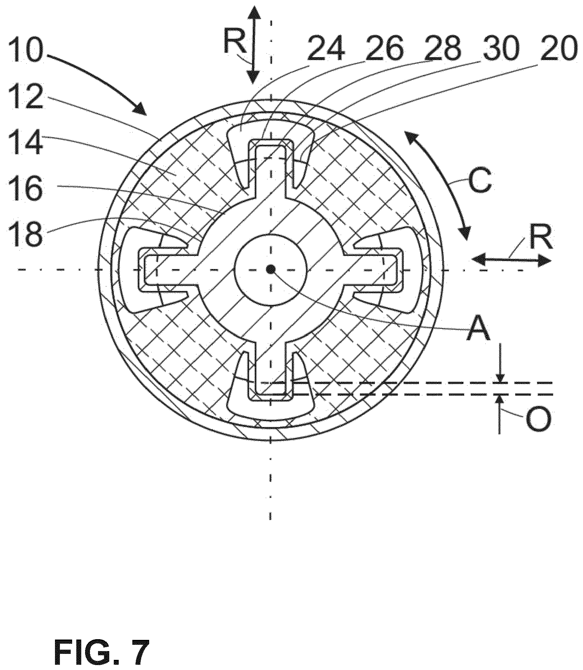

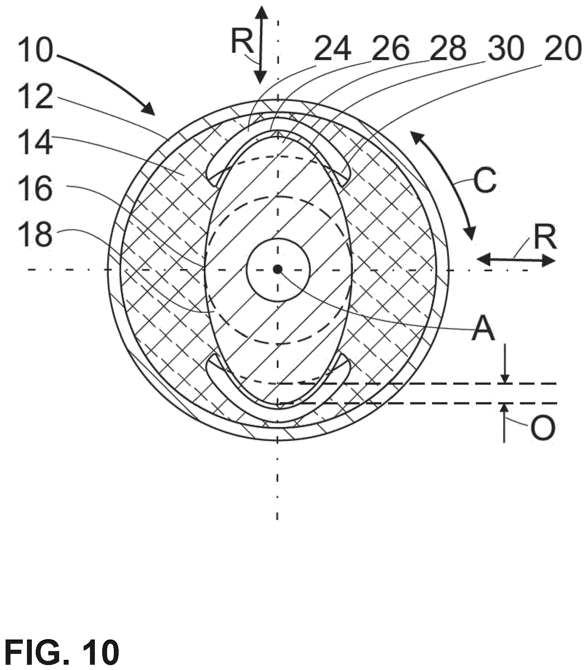

**FIGS. 7****,** **8****,** **9****, and** **10** generally illustrate cross sectional views of embodiments of bushings 10 according to teachings of the present disclosure. Similar elements are included and labeled in the figures.

With initial reference to **FIG. 7****,** the illustrated bushing 10 includes an outer tube 12, an elastomer body 14, a core 16, an inner central portion 18, a curved or bent (e.g., rolled) portion 20 of the outer tube 12, an elastomer layer 22 on the curved or bent portion of the outer tube, a plurality of voids 24, one or more radial elastomer stoppers 26, one or more radial stopper wings 28, and a plurality of wings 30. As generally illustrated, the bushing 10 may include a central (e.g., longitudinal) axis **A.** The circumferential direction **C** and radial direction(s) **R** are also shown. An overlap **O** of the wing (e.g., metallic wing) and the curved or bent portion of the outer tube in the axial direction is also generally illustrated.

In embodiments, the outer tube 12 includes an elastomer layer 22 (which may comprise rubber) on an inwardly bent portion of the outer tube. Such elastomer layer 22 may be disposed in an axial load path of a wing.

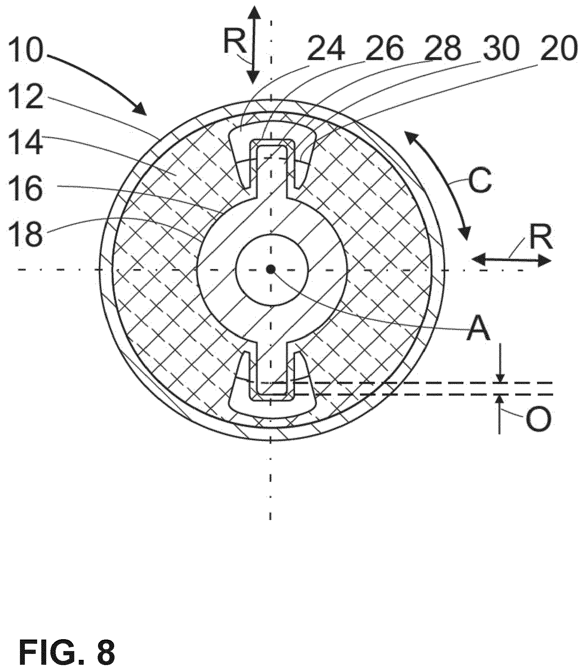

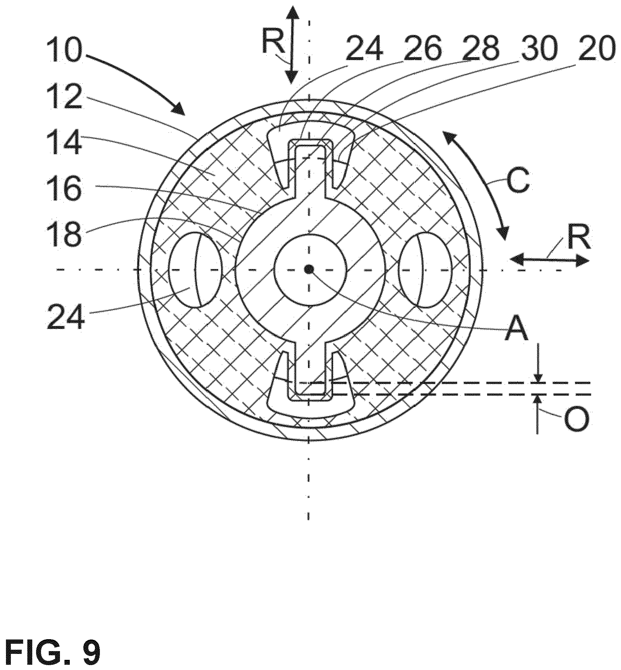

Embodiments of bushings 10 with two wings 30 (which may be of different sizes and/or shapes) are generally illustrated in **FIGS. 8-10****.** In embodiments, a plurality of wings may be provided in one or more sets of opposing, identically-shaped wings. Also, as generally illustrated in **FIG. 9****,** embodiments of bushings may include more voids 24 than wings 30.

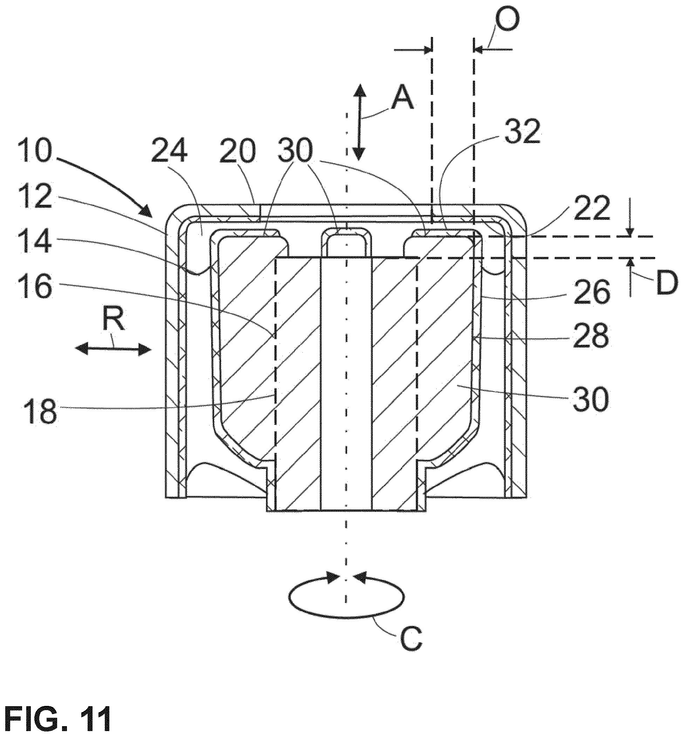

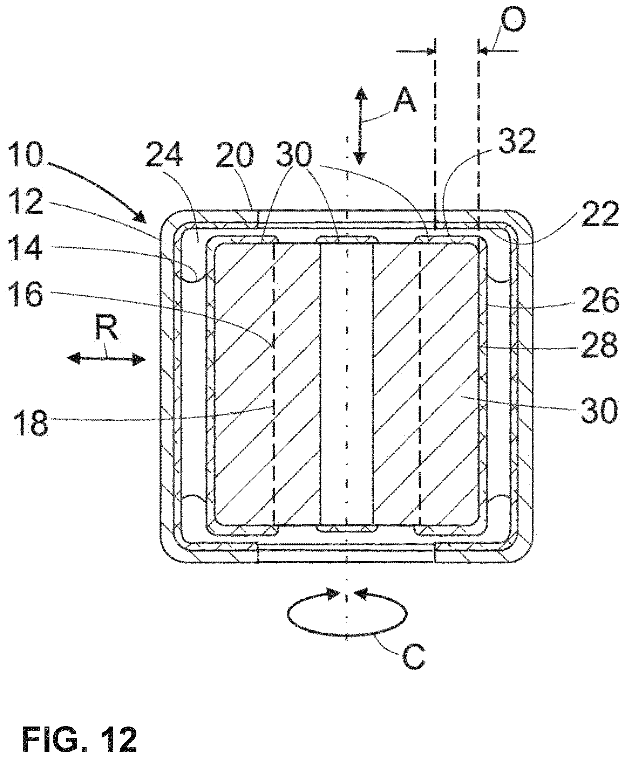

Cross sectional views of embodiments of bushings 10 are illustrated in connection with **FIGS. 11** **and** **12****.** **FIG. 11** additionally includes the identification of an axial elastomeric stopper 32 and a recess **D.** As generally illustrated in **FIG. 11****,** an outer radial surface of a wing 30 may include a tapered portion or segment. As generally illustrated in **FIG. 12****,** an outer radial surface of a wing 30 may be generally straight and/or may extend substantially coextensively (longitudinally) with the inner central portion 18 of the core 16. As generally illustrated in **FIGS. 11** **and** **12****,** a curved or bent (e.g., rolled) portion 20 of the outer tube 12 may provide an overlap **O** that may serve to limit axial movement of the core.

Reference throughout the specification to "various embodiments," "with embodiments," "in embodiments," or "an embodiment," or the like, means that a particular feature, structure, or characteristic described in connection with the embodiment is included in at least one embodiment. Thus, appearances of the phrases "in various embodiments," "with embodiments," "in embodiments," or "an embodiment," or the like, in places throughout the specification are not necessarily all referring to the same embodiment. Furthermore, the particular features, structures, or characteristics may be combined in any suitable manner in one or more embodiments. Thus, the particular features, structures, or characteristics illustrated or described in connection with one embodiment/example may be combined, in whole or in part, with the features, structures, functions, and/or characteristics of one or more other embodiments/examples without limitation given that such combination is not illogical or non-functional. Moreover, many modifications may be made to adapt a particular situation or material to the teachings of the present disclosure without departing from the scope thereof.

It should be understood that references to a single element are not necessarily so limited and may include one or more of such elements. Any directional references (e.g., plus, minus, upper, lower, upward, downward, left, right, leftward, rightward, top, bottom, above, below, vertical, horizontal, clockwise, and counterclockwise) are only used for identification purposes to aid the reader's understanding of the present disclosure, and do not create limitations, particularly as to the position, orientation, or use of embodiments.

Joinder references (e.g., attached, coupled, connected, and the like) are to be construed broadly and may include intermediate members between a connection of elements and relative movement between elements. As such, joinder references do not necessarily imply that two elements are directly connected/coupled and in fixed relation to each other. The use of "e.g." and "for example" in the specification is to be construed broadly and is used to provide non-limiting examples of embodiments of the disclosure, and the disclosure is not limited to such examples. Uses of "and" and "or" are to be construed broadly (e.g., to be treated as "and/or"). For example, and without limitation, uses of "and" do not necessarily require all elements or features listed, and uses of "or" are inclusive unless such a construction would be illogical.

While processes, systems, and methods may be described herein in connection with one or more steps in a particular sequence, it should be understood that such methods may be practiced with the steps in a different order, with certain steps performed simultaneously, with additional steps, and/or with certain described steps omitted.

All matter contained in the above description or shown in the accompanying drawings shall be interpreted as illustrative only and not limiting. Changes in detail or structure may be made without departing from the present disclosure.

## Claims

1. An elastic bushing, comprising:
a core including an inner central portion and a wing extending radially from the inner central portion, the inner central portion and the wing being an integrally formed one-piece component;
an outer tube; and
an elastomer body disposed between at least a portion of the core and at least a portion of the outer tube,
wherein a portion of the wing and a curved or bent portion of the outer tube provide an overlap in an axial direction that forms an axial travel limitation.

2. The elastic bushing of claim 1, wherein the elastomer body comprises rubber.

3. The elastic bushing of claim 1, wherein the elastomer body is configured to provide a void between a portion of the elastomer body and at least a portion of the wing.

4. The elastic bushing of claim 3, wherein the void permits movement of the core in a radial and/or an axial direction.

5. The elastic bushing of claim 3, wherein the void, in combination with the elastomer body, provides a progressive stiffness in a void direction with the wing serving as a radial limiter.

6. The elastic bushing of claim 1, wherein a plurality of wings extend radially from the inner central portion, and the plurality of wings are formed integrally with the inner central portion as a one-piece component.

7. The elastic bushing of claim 6, wherein the elastomer body provides a plurality of voids, and individual voids of the plurality of voids are configured to receive at least a portion of an individual wing of the plurality of wings.

8. The elastic bushing of claim 6, wherein a portion of the plurality of wings and one or more curved or bent portions of the outer tube provide an overlap in an axial direction that forms an axial limitation.

9. The elastic bushing of claim 6, wherein the plurality of wings comprise four wings.

10. The elastic bushing of claim 6, wherein the plurality of wings includes one or more sets of opposing identically-shaped wings.

11. The elastic bushing of claim 7, wherein a portion of the elastomer body is disposed around an outer surface of the plurality of wings to serve as a layer between the outer surface of the plurality of wings and the plurality of voids.

12. The elastic bushing of claim 1, wherein the core includes four wings, and the elastomer body include four voids, each of the four voids corresponding to one of the four wings, and the elastomer body has an x-shaped configuration.

13. The elastic bushing of claim 1, including an offset provided between an axial face of the wing and other portions of the core.

14. The elastic bushing of claim 1, wherein the outer tube includes a rubber layer.

15. The elastic bushing of claim 1, wherein an inwardly bent portion of the outer tube includes a rubber layer provided in an axial load path of the wing.

16. The elastic bushing of claim 1, wherein the core is comprised of metal.

17. The elastic bushing of claim 1, wherein the core is comprised of a high pressure die cast or extruded aluminum.

18. The elastic bushing of claim 1, wherein the inner central portion is annular.

19. The elastic bushing of claim 1, wherein the inner central portion is square-shaped or elliptical-shaped.

20. A core for an elastic bushing, the core comprising:
an inner central portion;
a wing that extends radially from the inner central portion;
wherein the inner central portion and the wing are integrally formed as a one-piece component; and the wing is configured to be disposed in a void in an outer radial elastomer.
